# EUROPÄISCHE PATENTSCHRIFT

(11) **EP 0 975 897 B1**
(45) Veröffentlichungstag und Bekanntmachung des Hinweises auf die Patenterteilung: **06.03.2002**
(21) Anmeldenummer: 98921448.1
(22) Anmeldetag: 09.04.1998
(51) Int. Cl.: F16G 1/00, F16G 13/20

(54) **EINRICHTUNG ZUR ÜBERTRAGUNG EINER KRAFT, INSBESONDERE DRUCKKRAFT**
DEVICE FOR TRANSMITTING A FORCE, IN PARTICULAR A COMPRESSION FORCE
DISPOSITIF DE TRANSMISSION D'UNE FORCE, NOTAMMENT D'UNE FORCE DE COMPRESSION

(30) Priorität: 15.04.1997 DE 29706739 U
(43) Veröffentlichungstag der Anmeldung: 02.02.2000
(73) Patentinhaber: Grasl, Andreas, 3452 Heiligeneich (AT)
(72) Erfinder: Grasl, Andreas, 3452 Heiligeneich (AT)
(74) Vertreter: Schubert, Siegmar, Dipl.-Ing.
(86) Internationale Anmeldenummer: EP9802073
(87) Internationale Veröffentlichungsnummer: WO9846903

(56) Entgegenhaltungen:
- DE-A- 3 910 263
- DE-C- 4 419 853
- DE-U- 29 706 739
- FR-A- 1 136 948
- GB-A- 191 013 397
- JP-A- 8 159 220
- US-A- 4 317 505
- US-A- 4 726 247
- US-A- 5 692 984

## Beschreibung

Die Erfindung betrifft eine Einrichtung zur Übertragung einer Kraft, insbesondere Druckkraft nach dem Oberbegriff des Anspruchs 1.

Bei derartigen bekannten Einrichtungen wird als längliches, gegliedertes, einseitig krümmungsfähiges Übertragungselement eine Gliederkette ähnlich einer Fahrradkette vorgesehen, die mit Zwischengliedern ausgerüstet ist, um ein Ausknicken nur in einer Richtung zuzulassen. Die Zwischenglieder sind so ausgebildet und angeordnet, daß sie bei geradeaus gerichteter Gliederkette und unter Einfluß einer Druckkraft aneinanderliegen, um diese Druckkraft von einem Antriebselement, beispielsweise einem Motor, auf einen von diesem zu betätigenden Gegenstand, beispielsweise ein zu schwenkendes Fenster oder einer Klappe, zu übertragen. Die Gliederkette hat gegenüber einem starren, länglichen Übertragungselement, nämlich einer Stange oder einem Stab, den Vorteil, daß sie raumsparend abgebogen und gegebenenfalls aufgewickelt werden kann. Als nachteilig empfunden wird jedoch die Geräuschentwicklung bei der Bewegung der Gliederkette sowie der dabei auftretende Verschleiß, der zwar bei Pflege der Gliederkette herabgesetzt werden kann, aber grundsätzlich deren Lebensdauer begrenzt. Hinzu kommt die komplizierte Fertigung, nämlich zur Herstellung und Anbringung der Zwischenglieder an der Gliederkette.

Bei einer Variante dieser bekannten Einrichtung, die ebenfalls zu dem aus der Praxis bekannten Stand der Technik gehört, werden zwei Gliederketten mit Zwischenelementen derart an einem Anfang einer geraden Strecke reißverschlußähnlich zusammengeführt, daß die Zwischenglieder abwechselnd ineinandergreifen und sich verkeilen. Die derart miteinander verbundenen beiden Gliederketten sind in besonderem Maße geeignet, ohne unerwünschtes Ausknicken Druckkräfte zu übertragen. Andererseits können die beiden Gliederketten an dem Anfang der geraden Strecke voneinander getrennt werden, indem jede der beiden Gliederketten um ein Kettenrad umgelenkt wird und die beiden Gliederketten an dem Spalt, der zwischen den beiden Kettenrädern gebildet ist, auseinandergezogen werden. Die an den Gliederketten angebrachten Zwischenglieder müssen hier zu der Funktion des reißverschlußartigen Verbindens und Trennens ausgebildet sein. - Diese Einrichtung mit zwei Gliederketten hat trotz der besseren Übertragungseigenschaften für die Druckkraft im wesentlichen die gleichen Nachteile wie die eingangs erörterte bekannte Einrichtung mit nur einer Gliederkette.

Bekannt ist ähnlich der letztgenannten Variante eine Einrichtung der eingangs genannten Gattung mit zwei länglichen, gegliederten, einseitig krümmungsfähigen Übertragungselementen, die längs einer im wesentlichen geraden Strecke reißverschlußartig zusammengeführt sind (FR-A-1 136 948). Dabei sind die länglichen, gegliederten und einseitig krümmungsfähigen Übertragungselemente jeweils auf einer Seite gezahnt, d.h. mit im Abstand zueinander angeordneten Verbindungsbolzen versehen, und auf einer der gezahnten Seite abgewandten Rückseite in Längsrichtung des jeweils gesamten Übertragungselementes weisen sie hintereinander angeordnete keilförmige Erhebungen auf, zwischen denen sich Lücken befinden derart, daß die Erhebungen der beiden Übertragungselemente geeignet sind, auf der geraden Strecke abwechselnd reißverschlußartig ineinanderzugreifen.

Hierbei sind die Übertragungselemente Kettenglieder. - Die Einrichtung weist zwei Zahnrollen auf, welche zwischen den Verbindungsbolzen in die Kettenglieder eingreifen und diese zwischen der geraden Strecke und einer anderen Strecke umleiten.

Der vorliegenden Erfindung liegt demgegenüber die Aufgabe zugrunde, eine Einrichtung zur Übertragung einer Kraft, insbesondere Druckkraft, längs einer im wesentlichen geraden Strecke der eingangs genannten Gattung so auszubilden, daß das Übertragungselement verschleiß- und geräuscharm ist und sich außerdem unkompliziert herstellen läßt.

Diese Aufgabe wird für eine Einrichtung der eingangs genannten Gattung mit den kennzeichnenden Merkmalen des Anspruchs 1. gelöst.

Die gemäß Anspruch 1 als Übertragungselemente vorgesehen Zahnriemen ermöglichen die Übertragung der Druckkraft auf einer geraden Strecke und die Umlenkung außerhalb der geraden Strekke in geräuscharmer und verschleißarmer Weise. Darüber hinaus können die klötzchenartigen Erhebungen auf seiner Rückenseite, die zur Übertragung der Druckkraft dienen, indem sie aneinanderliegen und sich gegeneinander abstützen, aus dem Zahnriemen direkt bei dessen Herstellung einstückig ausgeformt werden. Es entfallen also gesonderte Fertigungsvorgänge zur Herstellung von Zwischengliedern und deren Anbringung wie bei einer Gliederkette. Darüber hinaus kann der dergestalt einfach abgewandelte normale Zahnriemen, der wegen der Ausformung auf der Rückenseite dicker als ein normaler Zahnriemen ist, besonders zuverlässig funktionieren.

Im einzelnen ist jeweils die keilförmige Erhebung, wenn der Zahnriemen von der Seite her betrachtet wird, über einen schmalen Fußabschnitt in die Rückenseite des Zahnriemens übergehend gestaltet, wobei sie sich von dem Fußabschnitt nach außen symmetrisch zu einer Symmetrieachse, die rechtwinklig zu der Längsrichtung des Zahnriemens verläuft, verbreitert. Nach außen ist die keilförmige Erhebung durch einen Kopfabschnitt annähernd quaderförmiger Gestalt abgeschlossen. Diese Gestaltung der keilförmigen Erhebung erlaubt einerseits ein reibungsarmes reißverschlußartiges Zusammenführen der beiden Zahnriemen sowie deren Trennung, andererseits im verbundenen Zustand der beiden Zahnriemen eine sichere Übertragung der Druckkraft.

Die Einrichtung mit zwei im geraden Streckenabschnitt eine Einheit bildenden Zahnriemen ist besonders zur sicheren Übertragung der Druckkraft geeignet, da die beiden reißverschlußartig ineinander verzahnten Zahnriemen nicht leicht seitlich ausweichen können, wenn Druckkraft übertragen wird. Außerdem erfolgt hier das Zusammenführen zu der reißverschlußartigen . Verbindung, aber auch bei entgegengesetztem Bewegungsablauf der Zahnriemen das Trennen besonders geräuscharm. Die Einrichtung zeichnet sich durch eine einfache Fertigungsmöglichkeit aus.

In zweckmäßiger Weise zeichnet sich die Einrichtung dadurch aus, daß die klötzchenartigen Erhebungen auf der Rückenseite des Zahnriemens durch wie angegeben angeordnete Schlitze gebildet werden. Die Anbringung der Schlitze stellt nur eine geringfügige Abwandlung der normalen Herstellung des Zahnriemens dar.

In einer Weiterbildung ist eine annähernd zylindrische Ausnehmung am Fuß jedes Schlitzes in der Rückenseite des Zahnriemens ausgeformt, wobei der Schlitz quer zu der Längsrichtung des Zahnriemens verläuft. Durch diese Ausnehmung wird eine die mechanische Widerstandsfähigkeit des Zahnriemens herabsetzende Kerbwirkung weitgehend vermieden.

Vorteilhaft können die Flanken der keilförmigen Erhebungen in dem sich verbreiternden Bereich gemäß Anspruch 2 abgerundet sein, um das reißverschlußartige Verbinden und die Trennung der beiden Zahnriemen besonders reibungsarm zu gestalten.

Die Einrichtung kann gemäß Anspruch 3 durch eine Zahnrolle vervollständigt sein, indem der Zahnriemen zwischen der geraden Strecke, über welche die Druckkraft übertragen wird, und einer anderen Strecke, die zur Speicherung des zur Druckübertragung nicht benötigten Zahnriemenabschnitts führt, umgelenkt wird. Durch die Umlenkung wird die platzsparende räumliche Anordnung geschaffen.

Weiterhin kann gemäß Anspruch 4 an der Zahnrolle ein teilweise gekrümmter Führungskanal des Zahnriemens angeordnet sein, der den Zahnriemen über einen Teilumfang der Zahnrolle abdeckt. Mit diesem Führungskanal ist gewährleistet, daß der

Zahnriemen nicht von der Zahnrolle abspringt, sondern die von der Zahnrolle auf ihn ausgeübte Kraft als Druckkraft über die gerade Strecke überträgt.

Bei der Einrichtung mit zwei Zahnriemen, die längs einer im wesentlichen geraden Strecke reißverschlußartig zusammengeführt sind, ist eine Führungskanalanordnung symmetrisch zu der geraden Strecke mit je einer Zahnrolle für jeden Zahnriemen und je einem die Zahnrolle teilweise nach außen abdeckenden Führungskanalabschnitt ausgebildet. Dabei ist ein gemeinsamer gerader Führungskanalabschnitt in Verlängerung eines Spalts zwischen den Zahnrollen angeordnet. Diese Führungskanalanordnung erfüllt insoweit die gleiche vorteilhafte Funktion wie weiter oben im Hinblick auf eine einzelne Zahnrolle geschildert. Darüber hinaus laufen hier die beiden Führungskanalabschnitte, welche die Zahnrolle teilweise überdecken, in Verlängerung des Spalts auf der dem geraden Führungsabschnitt abgewandten Seite keilförmig zusammen und bilden an dieser Stelle eine Trennstelle für die beiden Zahnriemen.

Die Führungskanalanordnung für zwei Zahnrollen kann besonders kompakt gemäß Anspruch 6 als eine Baugruppe oder sogar als einstückige Einheit ausgeführt sein, indem die Führungskanalabschnitte Bestandteile eines Führungskanalteils sind.

Eine Variante zur Lösung der obigen Aufgabe geht aus von einer Einrichtung zur Übertragung einer Kraft, insbesondere Druckkraft, nach dem Oberbegriff des Anspruchs 7.

Eine derartige bekannte Einrichtung zur Übertragung einer Kraft, insbesondere Druckkraft, weist mindestens ein längliches, gegliedertes und einseitig krümmungsfähiges Übertragungselement auf, welches aus Abschnitten besteht, aus denen jeweils eine Eingriffseite ausgebildet ist, mit der sie in eine Verzahnung einer drehbar gelagerten Zahnrolle eingreifen, und an denen jeweils im wesentlichen rechtwinklig zu der Eingriffseite orientierte plane Stützflächen ausgebildet sind (US-A-4 317 505). Mehrere dieser Abschnitte sind mit ihren zueinander gerichteten Stützflächen im wesentlichen nebeneinander angeordnet. Diese Abschnitte sind mit Mitteln, nämlich zwei Seilen, versehen, die geeignet sind, die Abschnitte im wesentlichen einseitig um eine virtuelle Querachse auslenkbar in Längsrichtung des Übertragungselementes zusammenzuhalten. Dabei bleibt offen, aus welchem Rohling die Abschnitte hergestellt sind.

Erfindungsgemäß ist diese Variante zur Übertragung einer Kraft, insbesondere Druckkraft, mit den Merkmalen des kennzeichnenden Teils des Anspruchs 7 ausgebildet.

Dieses aus Abschnitten eines Strangprofils bestehende Übertragungselement kann unkompliziert auch für kleine Serien hergestellt werden. Dies gilt besonders, wenn die Abschnitte gemäß Anspruch 15 aus einem Aluminiumstrangprofil gesägt sind. In Längsrichtung des Strangprofils mit im wesentlichen rechteckförmigem Querschnitt sind auf zwei voneinander abgewandten Außenseiten die Stützflächen der Abschnitte vorgeformt, so daß sich die Größe der Stützflächen der abgetrennten bzw. abgesägten Abschnitte einfach aus den Längsabständen zwischen den Trennstellen des Strangprofils ergibt. Die Größe der Stützflächen kann so flexibel und fertigungsgünstig ohne zusätzliche Werkzeuge den über die Stützflächen zu übertragenden Kräften angepaßt werden. Damit lassen sich ohne weiteres auch große Stützflächen verwirklichen, die geringe Flächenpressungen ergeben. Es braucht kein Material besonders hoher Festigkeit eingesetzt zu werden, was wiederum das Trenn- und Bearbeitungswerkzeug schont.

Um die Abschnitte im wesentlichen einseitig auslenkbar in Längsrichtung zusammenhalten, sind diese in einzelnen jeweils mit einem Gelenkzylinder an einem Ende des Abschnitts ausgeformt. Eine diesen Gelenkzylinder teilweise umgreifende Gelenkpfanne am Ende eines unmittelbar benachbarten Abschnitts bildet zusammen mit dem Gelenkzylinder ein Schwenkgelenk mit zur Umlenkung des Übertragungselements - typisch etwa 90° - ausreichender Schwenkbarkeit. Die Gelenkpfanne und der Gelenkzylinder sind an zwei einander abgewandten Kanten des Strangprofils vorgeformt, brauchen also nicht aus hiervon abgetrennten Abschnitten nach Abtrennung ausgeformt zu werden.

Bei einer Weiterbildung gemäß Anspruch 8 können diese Abschnitte, welche zu dem Übertragungselement zusammengesetzt sind, an einem seitlichen Auseinanderfallen dadurch gehindert werden, daß ein Bolzen durch eine Durchgangsbohrung in Quer richtung des Übertragungselements geführt ist und die diesen Gelenkzylinder teilweise umgreifende Gelenkpfanne auch seitlich überdeckt.

Eine meist einfachere alternative Konkretisierung der Mittel, welche die Abschnitte im wesentlichen einseitig auslenkbar in Längsrichtung zusammenhalten, umfaßt nach Anspruch 9 mindestens eine Durchgangsbohrung in jedem Abschnitt rechtwinklig zu den Stützflächen - also in Längsrichtung des Übertragungselements - sowie parallel zu der Eingriffseite des Abschnitts und in deren Nähe, womit die Auslenkbarkeit in im wesentlichen einer Richtung kaum beeinträchtigt wird. Vervollständigt sind die konkreten Mittel durch mindestens ein längliches, biegeflexibles Verbindungselement durch diese Durchgangsbohrungen der im wesentlichen nebeneinanderliegenden Abschnitte. Zweckmäßig ist dieses Verbindungselement ein Drahtseil.

Das biegeflexible Verbindungselement bzw. Stahlseil ist bevorzugt gemäß Anspruch 11 an einem ersten Ende mit einem äußersten Abschnitt des Übertragungselements verbunden und an einem zweiten Ende in der Nähe eines entgegengesetzten äußersten Abschnitts des Übertragungselements durch eine Feder auf Zug gehalten.

Letztere Sicherungsmaßnahme ist besonders außerhalb eines Gehäuses geeignet, in dem insbesondere die Zahnrolle(n) drehbar gelagert ist bzw. sind. In dem Gehäuse können hingegen gemäß Anspruch 12 zwei zu einander parallele plane Führungsflächen genügen, zwischen denen das Übertragungselement geführt ist.

In einer einfachsten Ausführungsform sind die von dem Strangprofil abgetrennten Abschnitte annähernd quaderförmig. Sie sind in Verbindung mit ihrer Eingriffseite zum Eingriff in eine Zahnrolle geeignet und können über eine gerade Strecke des aus ihnen gebildeten einfachen Übertragungselements bzw. Strangs beachtliche Druckkräfte z.B. auf ein Fenster übertragen, ohne seitlich auszuknicken.

Noch viel weitgehender wird jedoch ein seitliches Ausknicken an der geraden Strecke vermieden, indem zwei für sich einseitig krümmungsfähige Übertragungselemente aus den oben geschilderten Abschnitten eines Strangprofils reißverschlußartig zusammengesetzt werden. Dazu dient die Ausbildung der Abschnitte gemäß Anspruch 14 mit jeweils einem flach quaderförmigen Fußabschnitt, der außen voneinander abgewandte Stützflächen sowie aus diesen rechtwinklig herausragend eine keilförmige Erhebung aufweist. Solche einander gegenüberliegend in Eingriff gebrachte Erhebungen sind geeignet, miteinander reißverschlußartig zu verzahnen. Nicht zu verwechseln ist damit die Verzahnung der Zahnrollen, die mit der Eingriffseite der Abschnitte in Kontakt steht und die bevorzugt, aber nicht ausschließlich, als Triebstockverzahnung ausgeführt sein kann.

Eine Einrichtung, für die kein Patentschutz beansprucht wird, sowie Ausführungsbeispiele der Erfindung als sogenannte zweite, dritte bzw. vierte Ausführungsform werden im folgenden anhand einer Zeichnung mit sechs Figuren beschrieben. Es zeigt, jeweils als Draufsicht:
- Fig. 1: einen Ausschnitt aus einer Einrichtung zur Übertragung einer Druckkraft als Draufsicht im Bereich einer Zahnrolle, für die kein Patentschutz beansprucht wird
- Fig. 2: eine zweite Ausführungsform, und zwar mit zwei Zahnriemen, die zwischen zwei Zahnrollen reißverschlußartig zusammengeführt werden, im Bereich eines Führungskanalteils,
- Fig. 3: eine dritte Ausführungsform, und zwar mit einem Übertragungselement, welches aus Abschnitten eines Strangprofils besteht,
- Fig. 4: einen Abschnitt des Strangprofils als Einzelheit zu Fig. 3,
- Fig. 5: eine vierte Ausführungsform, und zwar mit zwei Übertragungselemente, welche aus Abschnitten eines Strangprofils bestehen, und
- Fig. 6: einen Abschnitt als Einzelheit zu Fig. 5.

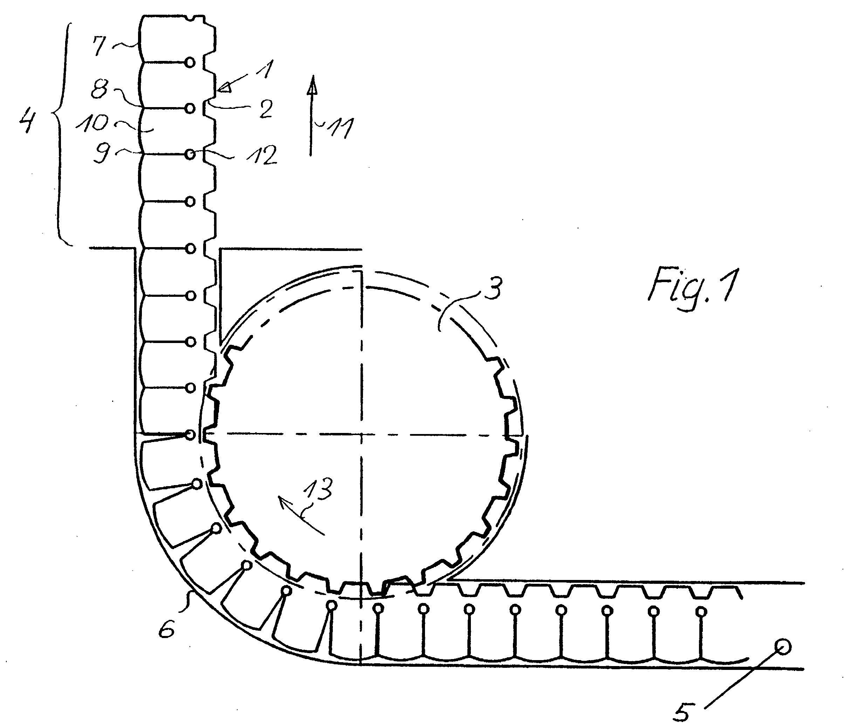

In Fig. 1 ist mit 1 allgemein ein Zahnriemen bezeichnet, auf dessen einer Seite, in der Zeichnung der Innenseite, eine übliche Zahnung ausgeformt ist, die in eine entsprechende Zahnung einer Zahnrolle 3 eingreift. Die Zahnrolle lenkt den Zahnriemen über etwa einen Viertel ihres Außenumfangs von einer geraden Strecke 4 zu einem weiteren Abschnitt bei 5 um, bei dem ein Abschnitt des Zahnriemens in nicht dargestellter weise raumsparend ohne eine Funktion der Kraftübertragung gelagert sein kann.

Über den Umlenkbereich erstreckt sich ein Führungskanal 6, der einerseits an den Außenumfang der Zahnrolle 3 angrenzt und in dem Umlenkbereich dafür sorgt, daß der Zahnriemen auch dann an der Zahnrolle anliegt, wenn der Zahnriemen nicht straff gespannt ist, sondern Druck, insbesondere von der Zahnrolle 3 über die gerade Strecke 4 zu einem nicht dargestellten Gegenstand, beispielsweise einem schwenkbaren Fenster oder einer Klappe, überträgt.

Zur Druckübertragung ist der Zahnriemen dicker als normal ausgeführt und auf seiner Rückenseite 7 mit Einschnitten, z.B. 8, 9, versehen, die eine klötzchenartige Erhebung 10 seitlich begrenzen. Wie aus der Zeichnung ersichtlich ist, verlaufen die Schlitze rechtwinklig zu der Längsrichtung des Zahnriemens, die in Fig. 1 mit einem Pfeil 11, bezogen auf die gerade Strecke 4, angedeutet ist. Aus Fig. 1 weiterhin ersichtlich ist eine annähernd zylindrische Ausnehmung 12 am Fuß jedes Schlitzes, z.B. 8, um dort schädliche Kerbwirkungen zu vermeiden.

Die Übertragung der Druckkraft erfolgt in der geraden Strecke 11, indem die klötzchenartige Erhebung an dem Schlitzen unter der Einwirkung der Druckkraft aneinanderliegen, so daß eine praktisch formschlüssige Verbindung zu dem angetriebenen Organ hergestellt wird.

Zur Erzeugung dieser Druckkraft kann die Zahnrolle durch Motorkraft in Richtung eines Pfeils 13 im Uhrzeigersinn verstellt werden.

Bei entgegengesetzter Drehrichtung der Zahnrolle 3 wird der Abschnitt des Zahnriemens 1 im Bereich der geraden Strecke 4 angezogen, und der Zahnriemen kann im Bereich der Zahnrolle in der dargestellten Richtung umgelenkt werden, damit ein weiterer Abschnitt 5 des Zahnriemens auf der Antriebsseite der Zahnrolle 3 aufbewahrt wird.

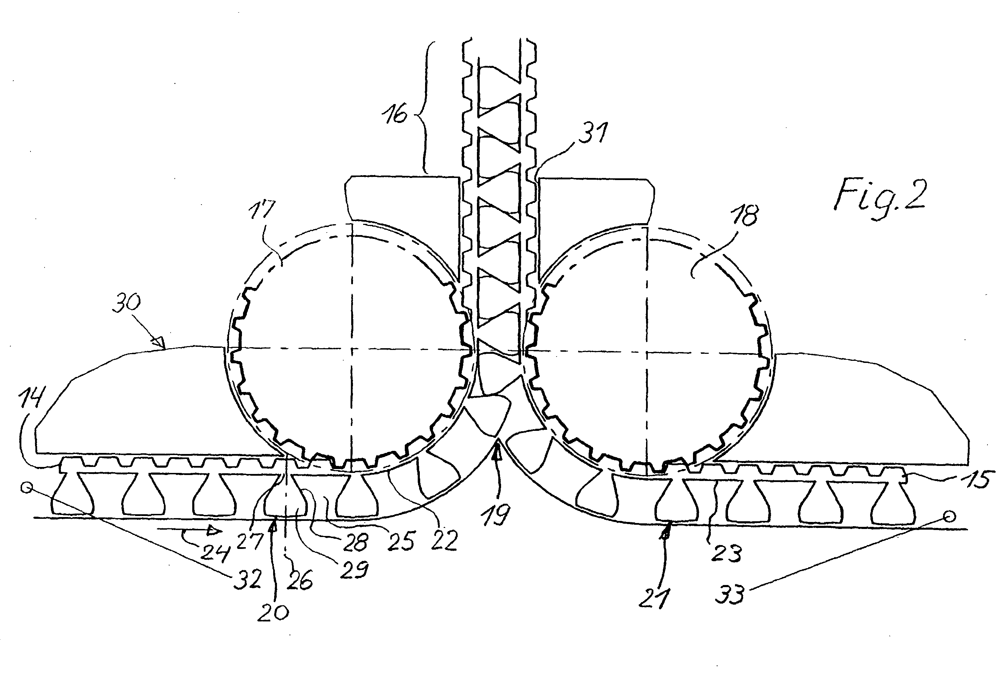

In der zweiten Ausführung nach Fig. 2 laufen zwei Zahnriemen 14 und 15 zwischen zwei Zahnrollen 17, 18 zusammen. Die Zahnriemen 14, 15 werden in einem zwischen den Zahnrollen 17, 18 gebildeten Spalt 19 reißverschlußartig zu einer Einheit zusammengefügt, die sich über die gerade Strecke 16 zu einem nicht dargestellten zu betätigenden Organ, beispielsweise einem Fenster oder einer Klappe, erstreckt.

Beide Zahnriemen 14, 15 weisen keilförmige Erhebungen, z.B. 20, 21, auf ihren Rückseiten 22, 23 auf. Die keilförmigen Erhebungen 20, 21 sind an jedem der. beiden Zahnriemen 14, 15 in Längsrichtung, hier z.B. Längsrichtung bei Pfeil 24, hintereinander angeordnet, wobei zwischen zwei benachbarten keilförmigen Erhebungen eine Lücke, z.B. 25, vorliegt, die durch die angrenzenden keilförmigen Erhebungen so geformt ist, daß eine keilförmige Erhebung des anderen Zahnriemens, hier 15, in die Lücke hineinpaßt, wenn die beiden Zahnriemen 14, 15 in dem Spalt 19 zwischen den Zahnrollen 17, 18 zusammengeführt werden. Dazu sind die keilförmigen Erhebungen zu einer Symmetrieachse, siehe z.B. die strichpunktierte Linie 26, symmetrisch geformt, und zwar mit einem verhältnismäßig schmalen Fußabschnitt 27 und einem sich von diesem nach außen verbreiternden Bereich 28, der nach außen durch einen annähernd quaderförmigen Kopfabschnitt 29 abgeschlossen ist. In dem Bereich der beiden reißverschlußartig miteinander verzahnten Zahnriemen, beispielsweise bei der geraden Strecke 16, kann ersehen werden, daß die dort nicht bezeichneten keilförmigen Erhebungen, die ebenfalls dort nicht bezifferten Lücken weitgehend ausfüllen und mit den sich verbreiternden Bereichen aneinander anliegen, wodurch die Druckkraft übertragen wird.

Die Einrichtung ist vervollständigt durch ein Führungskanalteil 30, welches symmetrisch zu der geraden Strecke 16, genauer einer nicht bezeichneten Mittelachse hierzu, ausgebildet ist. Das Führungskanalteil 30 weist einen gemeinsamen geraden Führungskanalabschnitt 31 für beide miteinander verzahnte Zahnriemen 14, 15 auf, die durch diesen Führungskanalabschnitt in Richtung der geraden Strecke 16 geführt werden. Weiterhin umfaßt das Führungskanalteil 30 zwei ähnlich wie der Führungskanal 6 in Fig. 1 ausgebildete Führungskanalabschnitte 32, 33, welche die Zahnrollen 17, 18 über etwa ein Viertel ihres Außenumfangs abdecken. An den letztgenannten Führungskanalabschnitten 32, 33 erfolgt die Umlenkung der einzelnen Zahnriemen 14, 15 um etwa 90° zu den Stellen, an denen die Enden dieser Zahnriemen im wesentlichen kraftfrei und raumsparend gelagert werden können. An der Stelle, zu der die Bezugslinie 19 für den Spalt zwischen den Zahnrollen 17, 18 führt, laufen die Führungskanalabschnitte 32, 33 keilförmig zusammen und bilden dort eine Trennstelle für die beiden Zahnriemen 14, 15.

Aus Fig. 2 ist ersichtlich, daß die Einrichtung zusammen mit dem Führungskanalteil sehr kompakt ausgebildet ist und einen zuverlässigen Betrieb erwarten läßt.

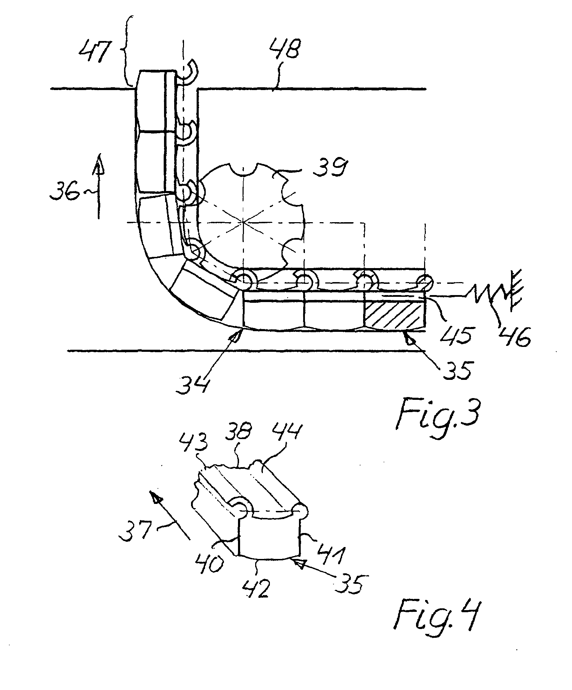

In Fig. 3 weist eine dritte Ausführungsform eine Einrichtung zur Übertragung einer Druckkraft ein Übertragungselement auf, welches allgemein mit 34 bezeichnet ist. Es besteht im wesentlichen aus nebeneinandergesetzten Abschnitten 35 eines in seiner Gesamtheit nicht dargestellten Strangprofils. Ein solcher Abschnitt ist in Fig. 4 getrennt herausgezeichnet, während er in Fig. 3 im Querschnitt dargestellt ist. Die Abschnitte des Strangprofils können somit auch als Glieder des Übertragungselements bezeichnet werden. Eine Längsrichtung des Übertragungselements, die mit 36 bezeichnet ist, entspricht nicht einer Längsrichtung 37 des Strangprofils, die in Fig. 4 durch einen Pfeil angedeutet ist, vielmehr sind die Abschnitte 35 in Längsrichtung 36 des Übertragungselements praktisch quer zu der Längsrichtung 37 des ursprünglichen Strangprofils nebeneinandergesetzt.

Jeder Abschnitt bzw. jedes Glied 35 weist eine Eingriffseite 38 auf, die zum Eingriff in einer Triebstockverzahlung einer drehbar gelagerten Zahnrolle 39 - siehe Fig. 3 - geeignet ist. Annähernd rechtwinklig zu der Eingriffseite weist der Abschnitt 35 zwei nach außen einander abgewandte plane Stützflächen 40, 41 auf, so daß sich nebeneinandergesetzte Abschnitte an diesen Stützflächen gegeneinander abstützen und Druckkräfte übertragen können, siehe wiederum Fig. 3. Der annähernd quaderförmige oder kastenförmige Abschnitt ist durch eine leicht konkav gekrümmte Außenseite 42 vervollständigt.

Damit jeweils zwei benachbarte derartige Abschnitte nach einer Seite auslenkbar miteinander verbunden werden können, weisen sie jeweils an einem Ende, an dem die Eingriffsfläche 38 und die Stützfläche 40 zusammenstoßen, eine Gelenkpfanne 43 auf, die geeignet ist, einen Gelenkzylinder 44 eines benachbarten Abschnitts teilweise zu umgreifen. Bezogen auf ein- und denselben Abschnitt, hier 35, ist der Gelenkzylinder 44 jeweils an dessen anderem Ende, nämlich an der Stelle, an der die Eingriffseite mit der Stützfläche 41 zusammenstößt, ausgeformt. Aus Fig. 3 geht im einzelnen hervor, wie die Gelenkpfanne 43 jeweils den Gelenkzylinder 44 des benachbarten Abschnitts umgreift. Dabei umgreift die Gelenkpfanne 43 den Gelenkzylinder 44 nicht vollständig, sondern nur so weit, daß einander benachbarte Abschnitte genügend voneinander ausgelenkt werden können, um dem Teilumfang der Zahnrolle 39 zu folgen, um den das Übertragungselement umgelenkt wird. Die Gesamtumlenkung ist dabei in dem Beispiel 90°, so daß einander benachbarte Abschnitte weniger als 90° gegeneinander ausgelenkt werden.

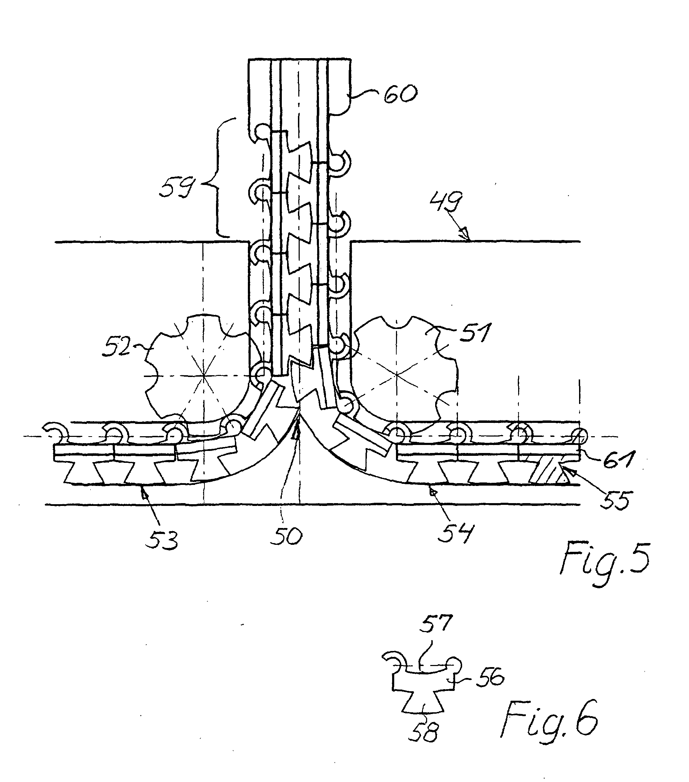

Zur Sicherung, damit die derart verbundenen Abschnitte 35 sich nicht seitlich, d.h. senkrecht zur Zeichenebene, voneinander lösen können, wo sie nicht durch andere Elemente zusammengehalten sind, weisen die Abschnitte in der Nähe ihrer Eingriffseite und parallel zu dieser verlaufende Durchgangsbohrungen 45 auf, die nur aus den Schnitten in Fig. 3 bzw. Fig. 5 ersichtlich sind. Durch diese Durchgangsbohrungen kann ein nicht dargestelltes Stahlseil geführt sein, welches somit die Abschnitte des Übertragungselements miteinander verbindet, indem ein äußeres Ende des Stahlseils mit einem äußeren Abschnitt verbunden ist, während ein entgegengesetztes Ende des Stahlseils über eine bei 46 symbolisierte Feder auf Zug gehalten wird. Die Strecke, auf der die aneinanderliegenden Abschnitte 35 des Übertragungselements 34 eine Druckkraft auf ein zu betätigendes Element, beispielsweise ein Fenster, übertragen können, ist in Fig. 3 mit einer Klammer 47 angedeutet. Diese Strecke liegt frei außerhalb einer Führungskanalanordnung 48.

In der Ausführungsform gemäß Fig. 5 weist die dort mit 49 bezeichnete Führungskanalanordnung analog zu dem Führungskanalteil 30 in Fig. 2 die Besonderheit auf, daß zwei horizontale Führungskanalabschnitte in Verlängerung eines Spalts 50 zwischen zwei einander gegenüberliegenden drehbaren Zahnrolle 51, 52 keilförmig zusammenlaufen, um eine reißverschlußartige Zusammenführung und Trennung von zwei Übertragungselementen 53 und 54 zu ermöglichen, die aus hierfür geeigneten Abschnitten 55 bestehen.

Ein solcher Abschnitt 55 ist in Fig. 6 herausgezeichnet. Er besteht im wesentlichen aus einem flach quaderförmigen Fußabschnitt 56, der an die Eingriffsfläche 57 angrenzt, sowie einer auf der nach außen abgewandten Seite des Fußabschnitts von dieser keilförmig abstehenden Erhebung 58, die so ausgeformt ist, daß zwischen zwei benachbarten Erhebungen der Abschnitte des einen Übertragungselements, z.B. 53, eine keilförmige Erhebung des anderen Übertragungselements, z.B. 54, aufgenommen wird. Dadurch bilden die Erhebungen eine Verzahnung, siehe Fig. 5 oberhalb der nicht bezeichneten Achsen der Zahnrollen 51, 52. Die aus der Führungskanalanordnung 49 herausragende Strecke der miteinander verzahnten Übertragungselemente 53, 54 ist mit 59 bezeichnet. Über diese Strecke können die Übertragungselemente, obwohl seitlich nicht geführt, beträchtliche Druckkräfte zu einem Anschlußteil 60 übertragen, ohne seitlich auszuweichen.

Die nebeneinander gesetzten Abschnitte je eines Übertragungselements können wiederum durch ein nicht dargestelltes Stahlseil zusammengehalten werden, welches durch Durchgangsbohrungen 61 geführt ist.

## Patentansprüche

1. Einrichtung zur Übertragung einer Kraft, insbesondere Druckkraft,
- mit zwei länglichen, gegliederten, einseitig krümmungsfähigen Übertragungselementen (14,15), die längs einer im wesentlichen geraden Strecke reißverschlußartig zusammengeführt sind,
- wobei die länglichen, gegliederten und einseitig krümmungsfähigen Übertragungselemente (14,15) jeweils auf einer Seite gezahnt sind und auf einer der gezahnten Seite abgewandten Rückseite in Längsrichtung des jeweils gesamten Übertragungselementes hintereinander angeordnete keilförmige Erhebungen (20,21) aufweisen, zwischen denen sich Lücken (22) befinden derart. daß die Erhebungen (20,21) der beiden Übertragungselemente geeignet sind, auf der geraden Strecke abwechselnd reißverschlußartig ineinanderzugreifen,
**dadurch gekennzeichnet, daß**
- als Übertragungselemente jeweils Zahnriemen (14,15) dienen, und
- die keilförmigen Erhebungen (20,21), auf die Längsseite des Zahnriemens gesehen,
-- jeweils über einen schmalen Fußabschnitt in die Rückenseite des Zahnriemens übergehen,
-- sich von dem Fußabschnitt nach außen symmetrisch zu einer Symmetrieachse (26), die rechtwinklig zu der Längsrichtung des Zahnriemens verläuft, verbreitern,
-- und in einen sich daran nach außen anschließenden Kopfabschnitt (29) annähernd quaderförmig ausgebildet sind.

2. Einrichtung nach Anspruch 1,
**dadurch gekennzeichnet,**
**daß** Flanken der keilförmigen Erhebungen (20, 21) an Übergangsstellen zwischen dem sich verbreiternden Bereich (28) und dem Kopfabschnitt (29) abgerundet sind.

3. Einrichtung nach Anspruch 1 oder 2,
**dadurch gekennzeichnet,**
**daß** der Zahnriemen an einer Zahnrolle (3, 14, 15) umgelenkt ist.

4. Einrichtung nach Anspruch 3,
**dadurch gekennzeichnet,**
**daß** an der Zahnrolle (3) ein teilweise gekrümmter Führungskanal (6) des Zahnriemens angeordnet ist, der den Zahnriemen über einen Teilumfang der Zahnrolle (3) abdeckt.

5. Einrichtung nach einem der Ansprüche 1 - 4,
**dadurch gekennzeichnet,**
**daß** bei einer Anordnung von zwei Zahnriemen (14, 15), die längs einer im wesentlichen geraden Strecke (16) reißverschlußartig zusammengeführt sind, eine Führungskanalanordnung symmetrisch zu der geraden Strecke (16) mit je einer Zahnrolle (17, 18) für jeden Zahnriemen (14, 15) und je einem diese Zahnrolle (17 bzw. 18) teilweise nach außen abdeckenden Führungskanalabschnitt (32, 33) ausgebildet ist, daß ein gemeinsamer gerader Führungskanalabschnitt (31) in Verlängerung eines Spalts (19) zwischen den Zahnrollen (17, 18) auf dessen einer Seite angeordnet ist und daß auf der anderen Seite des Spalts (19) in dessen Verlängerung die beiden die Zahnrollen (17, 18) teilweise abdeckenden Führungskanalabschnitte (32, 33) keilförmig zusammenlaufen und dort eine Trennstelle für die beiden Zahnriemen (14, 15) bilden.

6. Einrichtung nach Anspruch 5,
**dadurch gekennzeichnet,**
**daß** die Führungskanalabschnitte (31, 32, 33) Bestandteile eines Führungskanalteils (30) sind.

7. Einrichtung zur Übertragung einer Kraft, insbesondere Druckkraft, längs einer im wesentlichen geraden Strecke mit mindestens einem länglichen, gegliederten einseitig krümmungsfähigen Übertragungselement (34, 53, 54), wobei das Übertragungselement (34, 53, 54) aus Abschnitten (35, 55) besteht, an denen jeweils eine Eingriffseite (38, 57) ausgebildet ist, mit der sie in eine Verzahnung einer drehbar gelagerten Zahnrolle (39, 51, 52) eingreifen und an denen jeweils im wesentlichen rechtwinklig zu der Eingriffseite (38, 57) orientierte plane Stützflächen (40, 41) ausgebildet sind, mehrere dieser Abschnitte (35, 55) mit ihren zueinander gerichteten Stützflächen (40, 41) im wesentlichen nebeneinander angeordnet sind, und diese Abschnitte (35, 55) mit Mitteln versehen sind, die geeignet sind, die Abschnitte (35, 55) im wesentlichen einseitig um eine virtuelle Querachse auslenkbar in Längsrichtung des Übertragungselementes (34, 53, 54) zusammenzuhalten,
**dadurch gekennzeichnet,**
**daß** das Übertragungselement (34, 53, 54) aus Abschnitten (35, 55) eines Strangprofils besteht und daß als Mittel, die geeignet sind, die Abschnitte (35, 55) im wesentlichen einseitig auslenkbar in Längsrichtung (36) zusammenzuhalten, aus den Abschnitten an je einem ersten Ende in Längsrichtung ihrer Eingriffseite (38, 57) ein Gelenkzylinder (44) ausgeformt ist und an je einem zweiten Ende in Längsrichtung ihrer Eingriffseite (38, 57) eine Gelenkpfanne (43), die geeignet ist, einen Gelenkzylinder (44) eines benachbarten Abschnitts (35, 55) teilweise dergestalt zu umgreifen, daß die Abschnitte (35, 55) gegeneinander um die virtuelle Querachse verschwenkbar sind, wobei die Gelenkpfannen (43) zweier benachbarter Abschnitte (35, 55) zum Eingriff der Verzahnung der Rollen (39, 51, 52) geeignet sind.

8. Einrichtung nach Anspruch 7
**dadurch gekennzeichnet,**
**daß** die Abschnitte (35, 55) durch je einen Bolzen, der durch eine Durchgangsbohrung in Querrichtung des Übertragungselements durch den Gelenkzylinder (44) geführt ist und die Gelenkpfanne (49) seitlich überdeckt, gegen eine gegenseitige Verschiebung in Querrichtung gesichert sind.

9. Einrichtung nach Anspruch 7,
**dadurch gekennzeichnet,**
**daß** die Mittel, die geeignet sind, die Abschnitte im wesentlichen einseitig auslenkbar in Längsrichtung zusammenzuhalten, darin bestehen, daß die Abschnitte (35, 55) jeweils mit mindestens einer Durchgangsbohrung (45) in jedem Abschnitt (35, 55) rechtwinklig zu den Stützflächen (40, 41) sowie parallel zu der Eingriffseite (37, 57) des Abschnitts (35, 55) und in deren Nähe versehen sind und daß mindestens ein längliches, biegeflexibles Verbindungselement durch die Durchgangsbohrungen (45) der im wesentlichen nebeneinanderliegenden Abschnitte (35, 55) hindurchreicht.

10. Einrichtung nach Anspruch 9,
**dadurch gekennzeichnet ,**
**daß** das längliche, biegeflexible Verbindungselement ein Drahtseil ist.

11. Einrichtung nach Anspruch 9 oder 10,
**dadurch gekennzeichnet,**
**daß** ein externes Ende des länglichen, biegeflexiblen Verbindungselements durch eine Feder (46) auf Zug gehalten ist.

12. Einrichtung nach einem der vorangehenden Ansprüche,
**gekennzeichnet durch**
zwei zueinander parallel und ortsfest angeordnete plane Führungsflächen, zwischen denen das Übertragungselement insbesondere im Bereich der drehbar gelagerten Zahnrollen (39, 52, 51) seitlich geführt ist.

13. Einrichtung nach einem der vorangehenden Ansprüche,
**dadurch gekennzeichnet,**
**daß** die Abschnitte (35) annähernd quaderförmig sind.

14. Einrichtung nach einem der Ansprüche 7 - 12,
**dadurch gekennzeichnet,**
**daß** die Abschnitte (55) über einem flach quaderförmigen Fußabschnitt (56) eine keilförmige Erhebung (58) auf ihrer Rückseite aufweisen, dergestalt, daß zwei Rückseite an Rückseite reißverschlußartig zusammengeführte Übertragungselemente aus solchen Abschnitten miteinander verzahnen.

15. Einrichtung nach einem der Ansprüche 7 - 14,
**dadurch gekennzeichnet,**
**daß** die Abschnitte aus einem Aluminiumstrangprofil gesägt sind.

16. Einrichtung nach einem der vorangehenden Ansprüche,
**dadurch gekennzeichnet,**
**daß** die Verzahnung als Triebstockverzahnung ausgeformt ist.

## Claims

1. Device for transmitting a force, in particular a compressive force,
- comprising two elongated, articulated transmission elements (14, 15) capable of bending in one direction which are meshed along an essentially straight path like a zip,
- where the elongated, articulated transmission elements (14, 15) which are capable of bending in one direction each have a toothed pattern on one side and on the reverse side facing away from the toothed side along the entire transmission element in each case they comprise successive wedge-shaped projections (20, 21) with gaps (22) configured between them such that the projections (20, 21) of the two transmission elements are suitable for meshing with each other alternately on the straight path like a zip,
**characterised therein that**
- toothed belts (14, 15) serve as the respective transmission elements and
- the wedge-shaped projections (20, 21), viewed on the longitudinal side of the toothed belt,
- merge via a narrow foot section into the reverse side of the toothed belt
- widen symmetrically outwards from the foot section to an axis of symmetry (26) which is configured perpendicularly to the longitudinal direction of the toothed belt
- and is in the form of a head section (29) connected on the outside which is approximately cuboid in shape

2. Device as claimed in claim 1,
**characterised therein**
that flanks of the wedge-shaped projections (20, 21) at transition points between the widening area (28) and the head section (29) are rounded.

3. Device as claimed in claim 1 or 2,
**characterised therein**
that the toothed belt bends around a toothed roller (3, 14, 15).

4. Device as claimed in claim 3,
**characterised therein**
that a partially bent guide track (6) on the toothed belt is configured on the toothed roller (3) and covers the toothed belt for part of its path round the toothed roller (3).

5. Device as claimed in any one of claims 1-4,
**characterised therein**
that in a configuration of two toothed belts (14, 15) which are meshed like a zip along an essentially straight path (16) a guide track configuration is formed symmetrically to the straight path (16) with a toothed roller (17 or 18) for each toothed belt (14, 15) and a respective guide track section (32, 33) which partially covers each toothed roller (17, 18) on the outside, that a common straight guide track section (31) is configured on one side of a gap (19) between the toothed rollers (17, 18) and that on the other side of the extension to the gap (19) the two guide track sections (32, 33) which partially cover the two toothed rollers (17, 18) merge in a wedge shape and form at this juncture a separation point for the two toothed belts (14, 15).

6. Device as claimed in claim 5,
**characterised therein**
that the guide track sections (31, 32, 33) are parts of a guide track component (30).

7. Device for transmitting a force, in particular a compressive force, along an essentially straight path comprising at least one elongated, articulated transmission element (34, 53, 54) capable of bending in one direction where said transmission element (34, 53, 54) consists of sections (35, 55) on each of which a meshing face (38, 57) is formed with which they mesh with the toothing of a bearing-mounted toothed roller (39, 51, 52) and on which flat support surfaces (40, 41) are configured in each case essentially perpendicularly to the meshing face (38, 57), where a plurality of these sections (35, 55) is configured with their mutually facing support surfaces (40, 41) essentially adjacent to each other, and these sections (35, 55) are provided with means which are suitable for holding the sections (35, 55) together such that they can essentially be diverted in one direction about a virtual transverse axis in the longitudinal plane of the transmission element (34, 53, 54)
**characterised therein**
that the transmission element (34, 53, 54) comprises sections (35, 55) of an extruded profile section and that the suitable means for holding the sections (35, 55) together such that they can be diverted essentially in one direction in a longitudinal plane (36) comprise a hinge boss (44) moulded from the sections on a respective first end in the longitudinal direction of their meshing face (38, 57) and a hinge lug (49) on a respective second end in the longitudinal direction of their meshing face (38, 57), which hinge lug (43) is suitable for partially enclosing a hinge boss (44) of an adjacent section (35, 55) such that the sections (35, 55) can pivot about each other relative to the virtual transverse axis where the hinge lugs (43) of two adjacent sections (35, 55) are suitable for meshing with the toothing of the rollers (39, 51, 52).

8. Device as claimed in claim 7
**characterised therein**
that the sections (35, 55) are each secured against mutual displacement in a transverse direction by a pin which passes through the connecting bore in a transverse direction of the transmission element through the hinge boss (44) and covers the hinge lug (49) at the side.

9. Device as claimed in claim 7
**characterised therein**
that the means suitable for holding the sections together such that they can be diverted essentially to one side in a longitudinal plane consist of each of the sections (35, 55) being provided with at least one connecting bore (45) in each section (35, 55) at right angles to the supporting faces (40, 41) and parallel to the meshing face (37, 57) of the section (35, 55) and in its vicinity, and that at least one elongated flexible connecting element is passed through the connecting bores (45) of the essentially adjacent sections (35, 55).

10. Device as claimed in claim 9
**characterised therein**
that the elongated, flexible connecting element is a cable.

11. Device as claimed in claim 9 or 10
**characterised therein**
that an external end of the elongated, flexible connecting element is tensioned by means of a spring (46).

12. Device as claimed in any one of the preceding claims
**characterised by**
two parallel flat guide surfaces in a fixed position between which the transmission element is laterally guided, particularly in the region of the bearing-mounted toothed rollers (39, 52, 51).

13. Device as claimed in any one of the preceding claims
**characterised therein**
that the sections (35) are approximately cuboid.

14. Device as claimed in any one of claims 7 - 12
**characterised therein**
that the sections (55) over a flat cuboid foot section (56) have a wedge-shaped projection (58) on their reverse side such that two transmission elements of such sections merged back-to-back like a zip mesh with each other.

15. Device as claimed in any one of claims 7 - 14
**characterised therein**
that the sections are sawn from an aluminium extruded profile section.

16. Device as claimed in any one of the preceding claims
**characterised therein**
that the toothing is moulded to form a lantern pinion gear.

## Revendications

1. Dispositif de transmission d'une force, notamment d'une force de compression,
- comprenant deux éléments de transmission allongés (14, 15), à maillons, susceptibles d'être courbés vers un côté, qui sont regroupés à la manière d'une fermeture à glissière le long d'un parcours sensiblement rectiligne,
- les éléments de transmission allongés (14, 15), à maillons, susceptibles d'être courbés vers un côté, étant chacun denté sur un côté, et présentant sur un côté arrière opposé à celui qui est denté, des protubérances (20, 21) en forme de coin, disposées les unes à la suite des autres dans la direction longitudinale de la totalité de l'élément de transmission, et entre lesquelles se trouvent des interstices creux (22) de façon telle que les protubérances (20, 21) des deux éléments de transmission soient adaptées à engrener mutuellement, de manière alternée, à la façon d'une fermeture à glissière, sur le parcours rectiligne,
**caractérisé en ce que**
- ce sont des courroies crantées (14, 15) qui servent respectivement d'éléments de transmission, et
- les protubérances (20, 21) en forme de coin, en vue sur le côté longitudinal de la courroie crantée,
• se raccordent chacune par l'intermédiaire d'un tronçon de base étroit, au côté arrière de la courroie crantée,
• s'élargissent vers l'extérieur à partir du tronçon de base, de manière symétrique par rapport à un axe de symétrie (26) s'étendant perpendiculairement à la direction longitudinale de la courroie crantée,
• et sont, dans un tronçon de tête (29) s'y raccordant vers l'extérieur, d'une configuration approximativement parallélépipédique.

2. Dispositif selon la revendication 1, **caractérisé en ce que** des flancs des protubérances (20, 21) en forme de coin sont arrondis au niveau de zones de raccordement entre la zone qui s'élargit (28) et le tronçon de tête (29).

3. Dispositif selon la revendication 1 ou 2, **caractérisé en ce que** la courroie crantée est déviée sur un galet cranté (3, 17, 18).

4. Dispositif selon la revendication 3, **caractérisé en ce qu'**au niveau du galet cranté (3) est placé un canal de guidage (6), en partie courbe, de la courroie crantée, qui recouvre la courroie crantée sur une partie de la périphérie du galet cranté (3).

5. Dispositif selon l'une des revendications 1 - 4, **caractérisé en ce que** dans le cas d'un agencement de deux courroies crantées (14, 15) qui sont regroupées à la manière d'une fermeture à glissière le long d'un parcours (16) sensiblement rectiligne, un agencement de canal de guidage est réalisé symétriquement par rapport au parcours rectiligne (16) et comprend un galet cranté (17, 18) respectif pour chaque courroie crantée (14, 15) et un tronçon de canal de guidage (32, 33) respectif recouvrant partiellement vers l'extérieur ce galet cranté (17 et respectivement 18), **en ce qu'**un tronçon de canal de guidage rectiligne (31) commun est disposé en prolongement d'un interstice (19) entre les galets crantés (17, 18), sur un côté de celui-ci, et **en ce que** sur l'autre côté de l'interstice (19), en prolongement de celui-ci, les deux tronçons de canal de guidage (32, 33) recouvrant partiellement les deux galets crantés (17, 18), se réunissent en forme de coin et forment à cet endroit une zone de séparation pour les deux courroies crantées (14, 15).

6. Dispositif selon la revendication 5, **caractérisé en ce que** les tronçons de canal de guidage (31, 32, 33) sont des parties constitutives d'une pièce de canal de guidage (30).

7. Dispositif de transmission d'une force, notamment d'une force de compression, le long d'un parcours sensiblement rectiligne, comprenant au moins un élément de transmission allongé (34, 53, 54), à maillons, susceptible d'être courbé vers un côté, l'élément de transmission étant constitué de tronçons (35, 55) sur chacun desquels est réalisé un côté d'engrènement (38, 57) par lequel ils engrènent avec une denture d'un galet cranté (39, 51, 52) monté en rotation, et sur chacun desquels sont réalisées des surfaces d'appui planes (40, 41) sensiblement orientées perpendiculairement au côté d'engrènement (38, 57), plusieurs de ces tronçons (35, 55) étant disposés sensiblement les uns à côté des autres avec leurs surfaces d'appui (40, 41) dirigées les unes vers les autres, et ces tronçons (35, 55) étant dotés de moyens adaptés à maintenir assemblés les tronçons (35, 55) dans la direction longitudinale de l'élément de transmission (34, 53, 54), de manière à pouvoir être déviés sensiblement vers un côté autour d'un axe transversal virtuel,
**caractérisé en ce que** l'élément de transmission (34, 53, 54) est constitué de
tronçons (35, 55) d'un profilé extrudé et **en ce qu'**en guise de moyens qui sont adaptés à maintenir assemblés les tronçons (35, 55) dans la direction longitudinale (36) de manière à pouvoir être déviés sensiblement vers un côté, sur chaque tronçon est formé, à une première extrémité dans la direction longitudinale de son côté d'engrènement (38, 57), un cylindre d'articulation (44), et à une seconde extrémité respective dans la direction longitudinale de son côté d'engrènement (38, 57), une cavité d'articulation (43) qui est adaptée à entourer partiellement un cylindre d'articulation (44) d'un tronçon (35, 55) voisin de façon telle que les tronçons (35, 55) puissent pivoter l'un par rapport à l'autre autour de l'axe transversal virtuel, les cavités d'articulation (43) de deux tronçons (35, 55) voisins étant adaptées à engrener dans la denture des galets (39, 51, 52).

8. Dispositif selon la revendication 7, **caractérisé en ce que** les tronçons (35, 55) sont bloqués à l'encontre d'un coulissement réciproque dans la direction transversale, chacun par une broche qui est guidée dans un alésage de passage dans la direction transversale de l'élément de transmission à travers le cylindre d'articulation (44), et qui recouvre latéralement la cavité d'articulation.

9. Dispositif selon la revendication 7, **caractérisé en ce que** les moyens qui sont adaptés à maintenir assemblés les tronçons dans la direction longitudinale de manière à pouvoir être déviés sensiblement vers un côté, sont réalisés par le fait que les tronçons (35, 55) sont pourvus chacun d'au moins un alésage de passage (45) dans chaque tronçon (35, 55) perpendiculairement aux surfaces d'appui (40, 41) ainsi que parallèlement au côté d'engrènement (37, 57) du tronçon (35, 55) et à proximité de celui-ci, et **en ce qu'**au moins un élément de liaison ou d'assemblage allongé, flexible, s'étend à travers les alésages de passage (45) des tronçons (35, 55) disposés sensiblement côte à côte.

10. Dispositif selon la revendication 9, **caractérisé en ce que** l'élément de liaison allongé et flexible est un câble de fil métallique.

11. Dispositif selon la revendication 9 ou 10, **caractérisé en ce qu'**une extrémité externe de l'élément de liaison allongé et flexible, est maintenue en traction par un ressort (46).

12. Dispositif selon l'une des revendications précédentes, **caractérisé par** deux surfaces de guidage planes, parallèles et en position fixe, entre lesquelles est guidé latéralement l'élément de transmission, notamment dans la zone des galets crantés (39, 52, 51) montés en rotation.

13. Dispositif selon l'une des revendications précédentes, **caractérisé en ce que** les tronçons (35) sont approximativement de forme parallélépipédique.

14. Dispositif selon l'une des revendications 7 - 12, **caractérisé en ce que** les tronçons (55) présentent sur un tronçon de base (56) de forme parallélépipédique plate, sur son côté arrière, une protubérance en forme de coin (58), de façon telle que deux éléments de transmission constitués de tels tronçons et réunis à la manière d'une fermeture à glissière, engrènent réciproquement.

15. Dispositif selon l'une des revendications 7 - 14, **caractérisé en ce que** les tronçons sont sectionnés à partir d'un profilé d'aluminium extrudé.

16. Dispositif selon l'une des revendications précédentes, **caractérisé en ce que** la denture est réalisée sous la forme d'une denture à fuseaux.
